# EUROPEAN PATENT APPLICATION

(11) **EP 2 929 812 A1**
(43) Date of publication of application: **14.10.2015**
(21) Application number: 14199620.7
(22) Date of filing: 22.12.2014
(51) Int. Cl.: A47C 27/00, A47D 9/00, A47D 15/00

(54) **Family bed**

(30) Priority: 20.12.2013 IT RM20130708
(71) Applicant: Marsocci, Giovanni, 03030 Piedimonte San Germano (FR) (IT)
(72) Inventor: Marsocci, Giovanni, 03030 Piedimonte San Germano (FR) (IT)
(74) Representative: Papa, Elisabetta

(57) **Abstract**

A mattress 1 apt to allow the rest of at least an adult person lying on a substantially plane surface 1', shaped so as to have a housing 10 apt to allow the rest of a baby lying in a housing 10 substantially shaped in form of recess of the mattress itself

## Description

### Technical field of the invention

The present invention relates to a mattress and to a bed system, a so-called "family bed", apt to allow the rest of parents with a baby.

### Background

It is known that the birth of a baby involves a re-organization of the domestic spaces. In particular, as from the first months of life it is necessary purchasing many accessories for managing the several needs of the new-born.

In the first days of life the new-born is usually made to rest inside cradles or "baby-bearing" shells which indeed have a containment function and are shaped so as to guarantee to hold safely the baby himself/herself.

It is known in fact that new-borns need night attentions linked for example to their need to be breastfed or to be changed of the diaper or just to be cuddled and fall asleep again.

Although the cradle of the new-born is usually located in his/her parents' room so as to prevent mum and/or dad from shifting back and forth from a room to the other, especially at night-time, the parents' habit to have their baby rest in their bed is becoming increasingly widespread. Physical proximity, in fact, usually makes the baby fall asleep again more quickly as he/she feels the presence of his/her parent and he/she does not need to cry to attract his/her attention.

Usually, the baby is located in the middle of the double mattress, that is to say between his/her parents, in order to allow his/her parents themselves to take care of their baby and give him/her comfort and safety. Furthermore, the parents' physical presence makes it possible for them to contain their baby's body in order to guarantee his/her safety thereof with respect to the risk of undesired falls.

At the same time, such habit, however, implies several disadvantages. The main disadvantage of making the new-born sleep between his/her parents is that such position exposes the new-born to the potential risk of suffocation. The pillows which are located to act as a safety barrier, or the parents' bodies themselves , can turn out to be a danger for the baby in case he/she shifts aroung shifting during when sleeping. Furthermore, in order to allow for the space needed to contain the baby, his/her parents tend to assume unnatural positions when sleeping which do not give them a good night rest.

At the same time, the physical contact between the baby and parents' bodies causes the baby to be affectively dependent on his/her parents during his/her growth which will hardly lead him/her to accept his/her being subsequently moved into a bed other than his/her parents'.

### Summary of the invention

Therefore, the technical problem raised and solved by the present invention is to provide a mattress allowing to overcome at least one of the above-mentioned drawbacks with reference to the known art, thus obtaining several and important advantages.

Such problem is solved by a mattress according to claim 1 and also, according to the same inventive concept, by a bed system as subject of claim 11 and claim 23.

Preferred features of the present invention are laid out present in the dependent claims.

The device according to the present invention consists in a mattress providing the presence of a housing, that is to say a cradle or a recess, embedded in the mattress itself and ready to house the new-born as from his/her early days of life.

Preferably, said recess represents a compartment-cradle having the features and the sizes of a known cradle used for babies aged from zero to five and it is equipped, for example, with winter-summer, anti-mite, anti-suffocation and anallergic pillow and mattress. Furthermore, given its particular location and shape, the compartment cradle can also act as a baby-changing table.

Advantageously, the mattress according to a preferred embodiment of the present invention allows for the rest of at least an adult and a baby, the latter being located inside said housing which is implemented in the mattress itself and preferably obtained so that the baby's resting surface is entirely circumscribed by containment walls.

Therefore, such mattress makes it possible to realize the so-called "family-bed", the main purpose thereof is to simplify the parents' tasks and to improve the baby's safety.

In fact, the mattress according to a preferred embodiment of the invention has the advantage of reducing the need to purchase baby's accessories, for example the cradle or other, as it will be better described hereinafter. Moreover, as well as limiting the purchases that are needed to take care of the baby in his/her early days of life, the described invention allows to maximise domestic spaces.

An additional advantage of the mattress according to the present invention is that, in case it is not used or anyway when the baby grows and the size of the housing cannot contain him/her anymore, the resting surface of the adult is restored by inserting a closure element in the housing itself. In other words, once the baby has grown and, for example when he/she is over five , the cradle can be perfectly closed by means of a suitable "cradle-plug", that is a small mattress, preferably equipped with handles, substantially identical in terms of size to a main compartment of the cradle itself.

Furthermore, the mattress according to a preferred embodiment variant comprises a barrier or bedrail, preferably telescopic and/or retractable and preferably located inside the cradle at the parent's side so as to stop the parent from involuntarily falling into the cradle itself when he/she is sleeping.

At the same time, the barrier prevents the baby from coming out of the housing wherein he/she is located.

The proposed mattress structure makes it possible for the parent to watch over his/her baby without having to shift : calming the baby down who is crying during the night, tucking in the blankets, cuddling him/her, giving confort to him/her and taking care will be much easier.

Before the invention it was necessary to purchase a cradle and a baby-changing table, now with the family-bed at least the thee requirements of bed, cradle and baby-changing table can be met with one single structure.

With that is is possible to obtain a perfect and contemporary design and also, once the baby has grown up, it prevents unnecessary removal of furniture which only engage other spaces in the domestic environment.

For instance, as it is known, the cradle is only used in the baby's early first months of life , then as soon as he/she grows up, it necessarily has to be moved into a bigger bed and this makes the cradle unused.

Other advantages, features and usage methods of the present invention will become evident from the following detailed description of some embodiments which are shown by way of example and not for a limitative purpose.

### Brief description of the figures

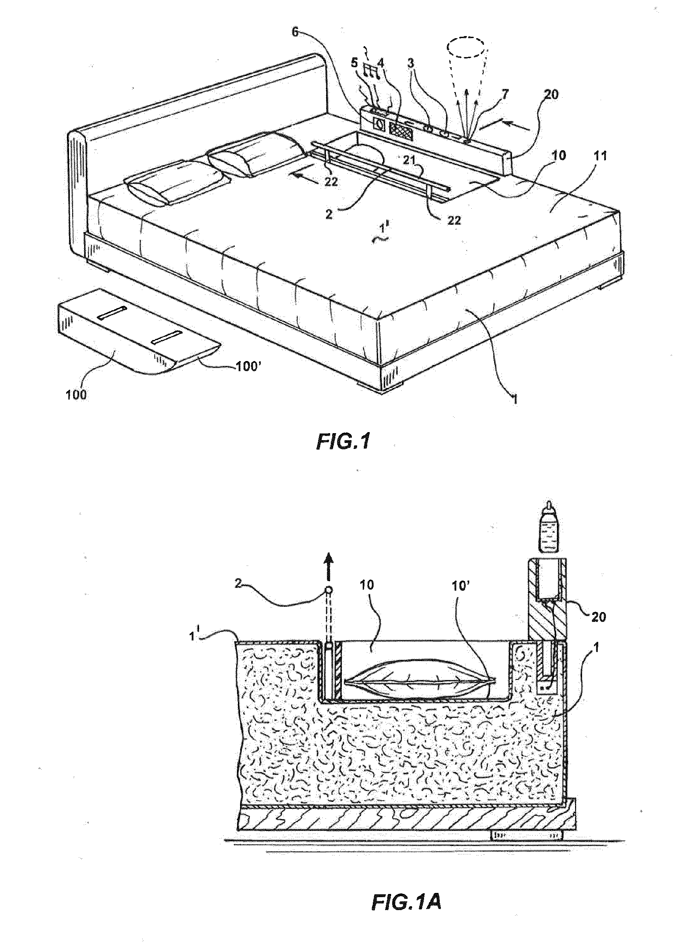

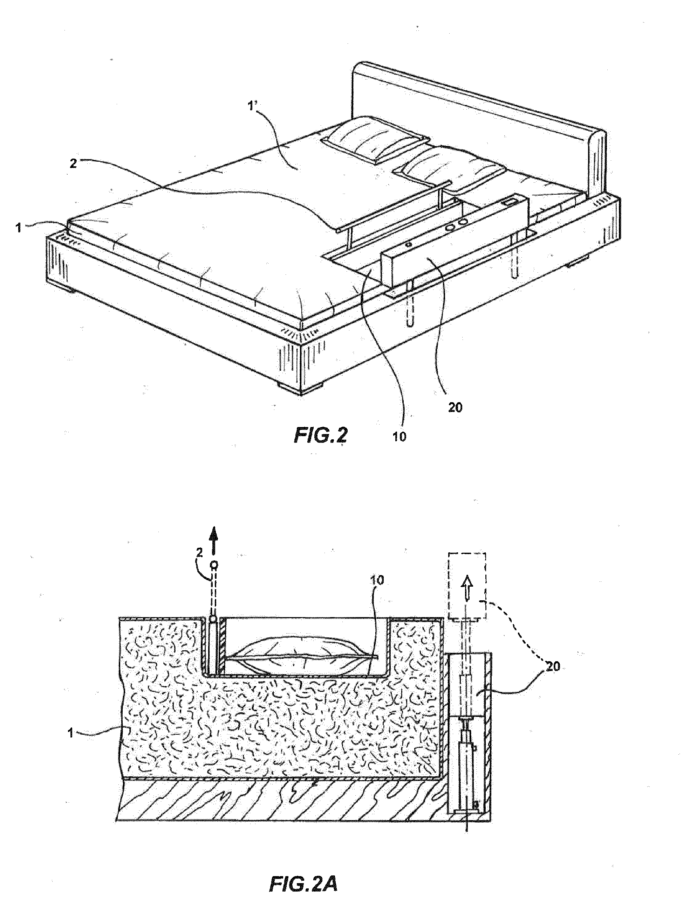

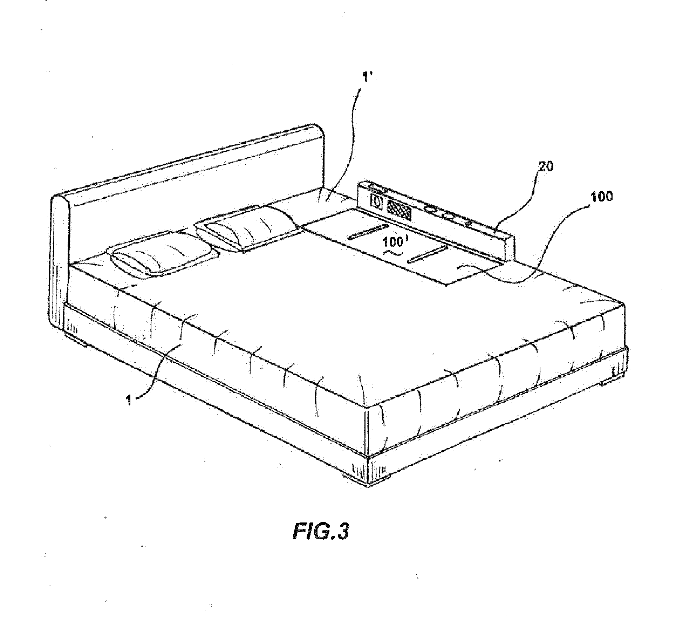

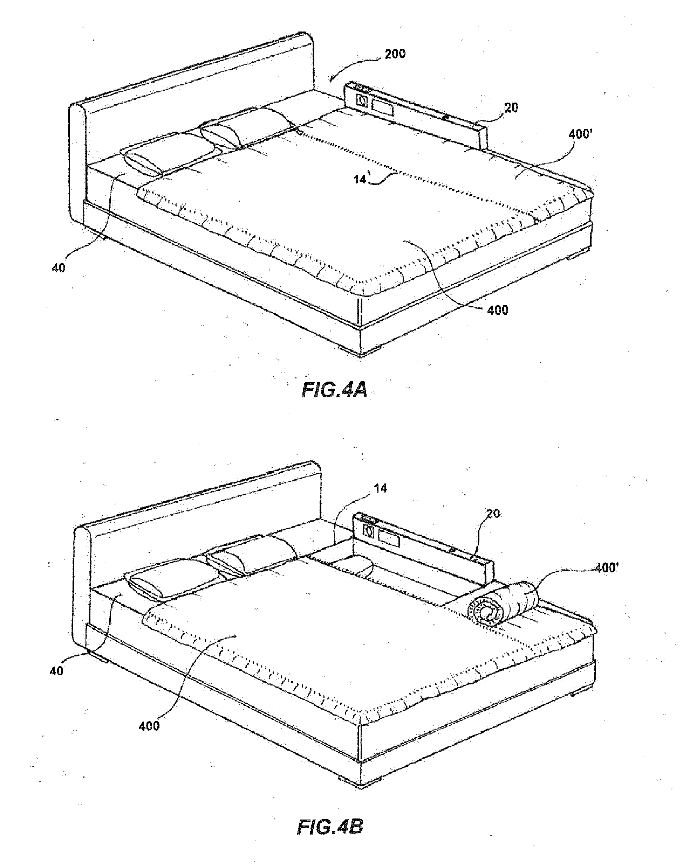

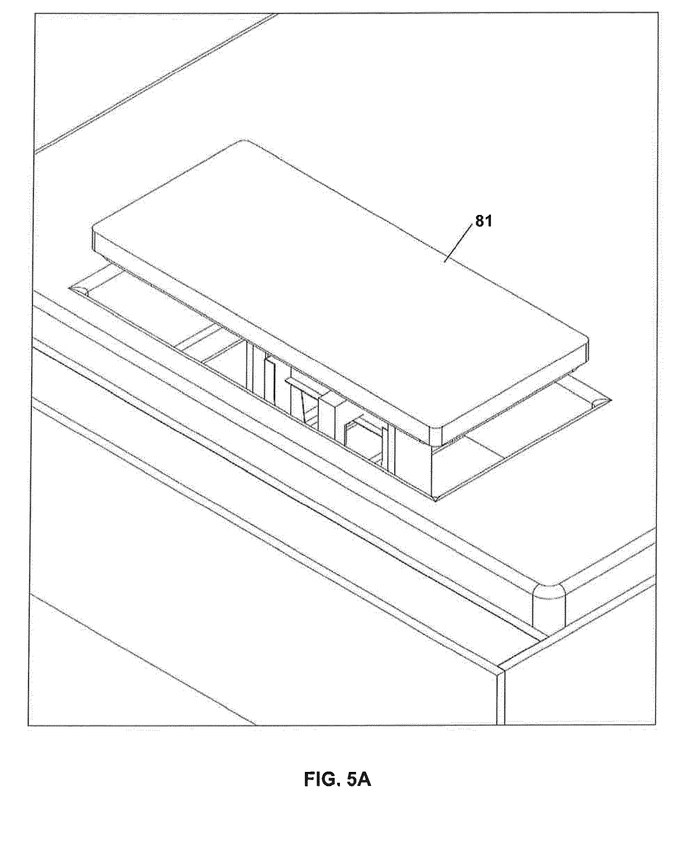

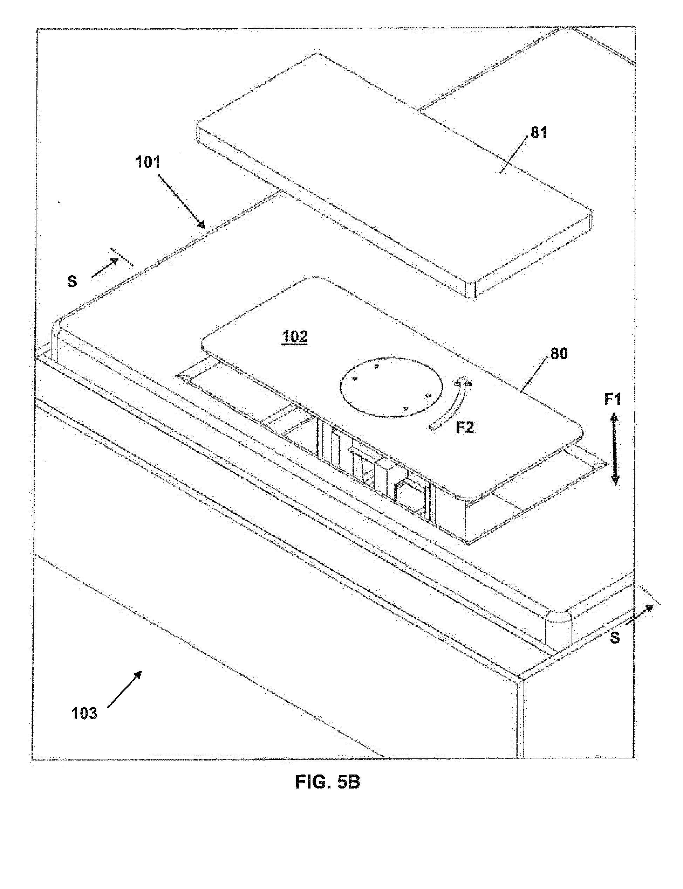

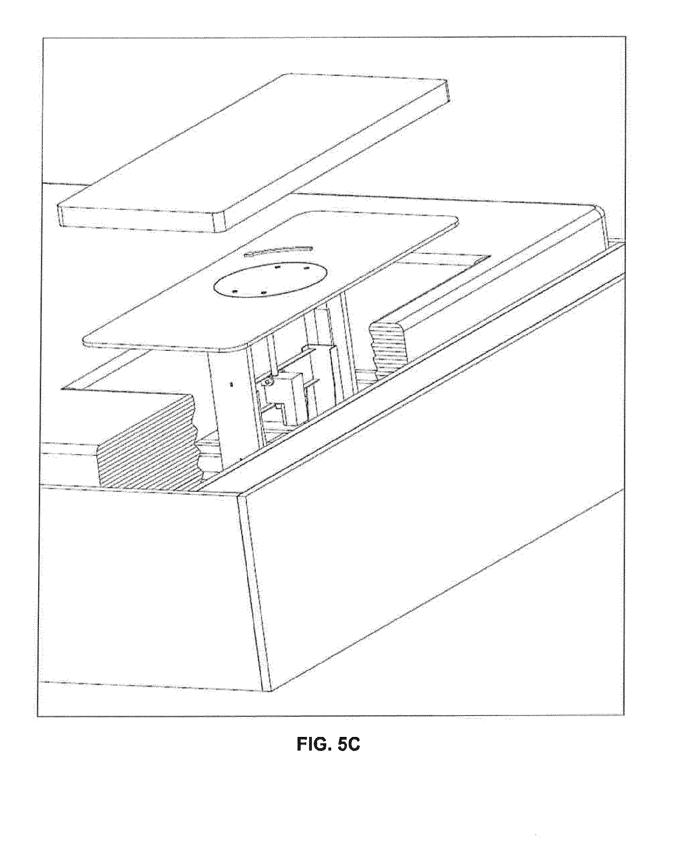

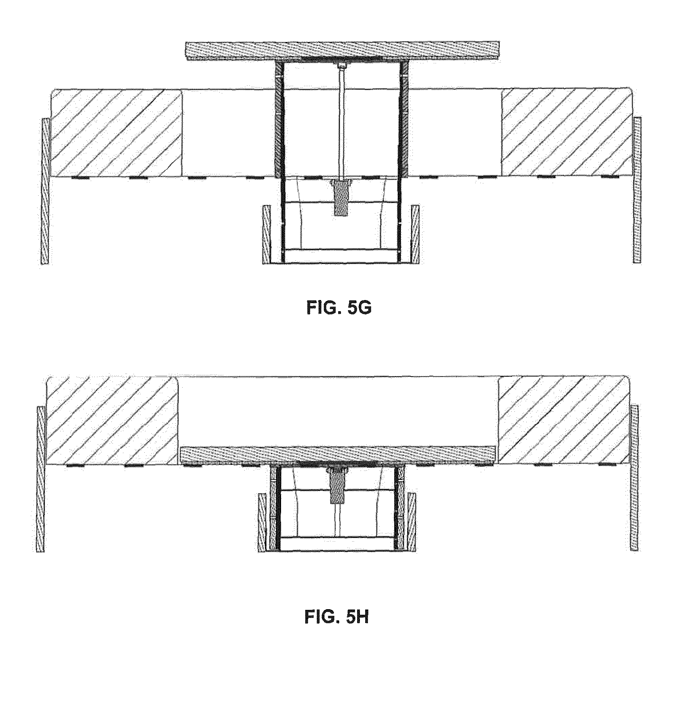

The figures of the enclosed drawings will be referred to, wherein:
▪ Figure 1 shows a perspective view of the mattress according to a preferred embodiment of the present invention, comprising a housing and inserted in a bed;
▪ Figure 1A shows a partial view in section of the bed of Figure 1 at the housing;
▪ Figure 2 shows a perspective view of the mattress according to an embodiment of the present invention, comprising a housing and inserted in a bed;
▪ Figure 2A shows a partial view in section of the bed of Figure 2 at the housing;
▪ Figure 3 shows a perspective view of the mattress according to a preferred embodiment of the present invention, wherein the housing is closed; and
▪ Each of Figures 4A and 4B one shows a perspective view of a bed system according to a preferred embodiment of the present invention, wherein the mattress is coated or partially coated, respectively;
▪ Figures 5A to 5H relate to an additional preferred embodiment variant providing, at a lower wall of the housing, a mobile platform, by showing perspective views, respectively - and some partially section views - of a bed system in different operating configurations (Figures 5A to 5F) and two cross-section views (Figures 5G and 5H are performed according to an axis indicated as S-S in Figure 5B), always in different operating configurations.

### Detailed description of preferred embodiments

By firstly referring to Figures 1 and 1A, a mattress according to a preferred embodiment of the invention is overall indicated as 1.

In the present embodiment, the mattress 1 is apt to allow the rest of at least an adult person lying on a substantially plane surface 1' and it is shaped so as to have a housing 10 apt to allow the rest of an additional person lying on an additionally substantially plane surface 10'.

In particular, the above-mentioned surfaces 1' and 10' are lying on respective planes which are substantially parallel and vertically spaced from one another. Therefore, the housing 10 is substantially shaped like a recess of the mattress itself and preferably it is obtained so that the additional surface 10' is wholly circumscribed by containment walls defined by the mattress itself.

Preferably, the housing 10 has dimensions so as to allow to accommodate a baby lying on the additional surface 10'. Furthermore, the recess has a substantially elongated plan shape, so that a main dimension thereof is parallel to a corresponding main dimension of the mattress and of the bed, so that the baby lies parallelly to his/her parent. In the represented example, the recess 10 and the mattress 1 have each one a substantially rectangular plan shape, with corresponding indeed parallel larger (and smaller) sides.

Therefore, the described invention allows the parents to monitor the baby and to cuddle him/her from a lying position.

As it is also shown in figure 3, in a preferred embodiment variant the mattress 1 according to the present invention further comprises a closure element 100 of the recess 10, apt to be inserted in the recess itself to have, upon use, a main surface 100' substantially coplanar to the surface 1'. At the same time, the closure element is apt to be removed from the recess to allow the use thereof as housing for a baby in a lying position.

In particular, the closure element 100, the so-called "cradle-plug", and the recess 10 are configured to engage each other in shape coupling.

In this way, under conditions of non-use of the recess or for example when the baby has sufficiently grown up to have to sleep in a separate bed, by inserting the closure element 100 the whole upper extension area of the mattress can be used again as a resting surface for the parents.

Therefore, the "cradle-plug" has the purpose to "plug" the cradle compartment and to give life to a normal mattress.

Preferably, the closure element 100 is further made of the same material, or coupling of materials thereof the mattress itself is made, thus by allowing not only a dimensional continuity but even a qualitative continuity of the resting surface for the parents.

In particular, considering the market needs, the shapes, dimensions, structures and materials defined in the present description can be different.

Preferably, the closure element 100, at its own upper surface, has grasping devices, for example handles, to facilitate the motion of the element 100 itself and in particular the insertion and the removal of the closure element 100 from the housing 10.

Still with reference to Figure 1 and 1A, in the present example the mattress 1 further comprises a barrier 2 positioned or positionable, upon use, next to a side or containment wall of the housing 10, so as to stop the parent from involuntarily falling into the housing itself when he/she is sleeping.

Advantageously, the rest of the baby is then made safer when the baby is located closer to his/her parents.

The barrier 2 comprises at least a preferably elongated element 21, substantially horizontal and arrange parallelly to the larger size of the recess 10. Such elongated element 21 defines a kind of parapet. In the described example the elongated element 21 is mounted, preferably in a retractable way, on a pair of vertical elements or uprights 22. Advantageously, the elongated element 21 is fixed to telescopic elements apt to slide telescopically in or on vertical uprights 22. Preferably, the latter have a suitable tubular construction suitable to receive inside thereof the telescopic elements.

Preferably, the uprights 22 are fixed to the surface 10' in proximity to a side wall of the the housing itself. In the described example, such uprights have a length not greater than the maximum height of the housing 10, so as not to come out therefrom, in a configuration assembled substantially orthogonal to the surface 10'. By means of a sliding of the telescopic elements in the tubular element, the barrier 2 is apt to be moved from a configuration of minimal extension wherein it is wholly inserted into the housing 10, into a configuration of maximum extension wherein it is positioned above the housing 10. In the configuration of maximum extension, as it is shown in the figures, the barrier 2 is positioned so as to overlook the thickness of the mattress and stop the parents' from involuntarily falling into the housing when they are sleeping and prevent the baby from coming out of the housing 10. In order to guarantee a desired structural rigidity, the tubular uprights and the telescopic elements are preferably made of metallic or plastic material.

Advantageously, in an embodiment variant the barrier 2 comprises a panel fixed or which can be fixed on the tubular uprights and faced towards the interior of the housing so as to create a new side wall for the recess wherein the baby is contained. Preferably, the panel is made of half-rigid material, for example foam rubber, apt to deform elastically in case of possible collisions of the baby on the barrier 2.

Preferably, the tubular uprights are removably fixed to the surface 10', so that y they can easily disassemble in case of non-use and can allow the insertion of the "cradle-plug" 100 in the housing 10.

By referring to Figure 4A and 4B, an additional aspect of the present invention is related to a lining element 40 of a mattress, in particular a sheet or a blanket, apt to be used in combination with the above-mentioned mattress 1, shaped so as to be coupled to the surface 1' and comprises a removable portion shaped to be positioned at the housing 10.

In particular, the removable portion is defined by a peripheral edge thereat means 14 are positioned for fixing the peripheral edge itself to the mattress 1, for example at the housing 10.

In a first embodiment the removal of the portion from the lining element is provided, so as to obtain an empty space, in particular at the housing 10, and allow inside the housing itself the use of linen exclusively dedicated to the baby.

Therefore, in this case the fixing means 14, for example elastic elements and/or automated elements or slide fastener elements, are positioned at the peripheral edge to guarantee the fixing of the edge itself with respect to the mattress at the housing 10.

In case the fixing means positioned on the lining element, for example a sheet or any linen element, include automated elements and/or slide fastener, corresponding fixing means are obviously provided on the mattress at the housing. In particular, such fixing means are positioned at the side walls of the housing 10, so as to result wholly inserted into the thickness of the mattress in a configuration for inserting the closure element 100.

In an alternative embodiment, the portion of the lining element is instead shaped so as to coat the whole surface of the housing. In this case, it is preferable to position an elastic element at an edge in contact with the walls of the housing, in order to guarantee the fixing of the element itself with respect to the mattress at the housing 10.

The lining element 40 further comprises a covering element 400 apt to cover a person lying on the lining element 40 itself.

Even the covering element comprises a removable portion 400' in particular apt to be positioned, upon use, at the housing 10. Advantageously, the portion 400' is connected to the covering element 400 by means of additional fixing means 14', for example automated elements and/or slide fastener, so as to be able to be moved independently from the covering element 400 itself. In this way it will be possible to cover the whole size of the mattress, in a condition of non-use of the housing 10 and in the same way it will be possible to remove the portion 400' only, during the baby's resting phase allowing for the use of linen which are exclusively dedicated to the baby and at the same time guaranteeing the desired covering by the parents.

Still with reference to to Figure 4A and 4B, the present invention further relates to a bed system 200, comprising a mattress and/or a lining element.

Preferably, as it is shown for example also in Figure 2 and 2A, the bed system 200 comprises a multi-functional unit 20. In the described example, the multifunctional unit 20 is positioned or positionable at an outer edge of the mattress 1 itself, for example at an outer edge of the housing 10.

The multifunctional unit 20 is shaped in a way that it can act as an additional containment barrier so as to avoid unwished falls of the baby outside the housing 10.

In the herein described preferred embodiment, the mattress 1 comprises means for the interlocking insertion of the multifunctional unit 20 at an outer edge of the mattress.

In an alternative embodiment, the bed system 200 comprises a support for the mattress, which is for example shaped as a bed frame.

In the present description reference has been made to mattress 1 , which is outlined in a way that it can be used as a bed system with or without the use of a supporting frame. However, as it is shown in Figures 2 and 2A, an embodiment version of the present invention is provided wherein the multifunctional unit 20 is assembled on an outer edge of the supporting frame.

In the latter case, with respect to the above- considered version wherein the multifunctional unit is assembled on the mattress itself, it will be necessary to provide an increase in thickness of the edge of the supporting frame to allow for the assembly of the multifunctional unit 20, according to sizing criteria that are immediately evident to a person skilled in the art.

In particular, the multifunctional unit 20 is mounted in a telescopic manner and it is sized in a way that it can entirely be contained inside the bed edge in a non-use configuration.

Therefore, even the edge sizing has to be apt to allow the above-mentioned telescopic assembly and the containment of the same multifunctional unit 20 inside the bed edge in a non-use configuration.

In the described example, and as it is shown in Figure 1, the multifunctional unit 20 has one or more places suitable to house one or more devices apt to meet the parents' need to manage the child needs, for example baby bottles, diapers or other.

In particular, the multifunctional unit 20 comprises a food warmer 3, the latter preferably having a thermostat to choose the desired temperature.

Advantageously, it will then be possible to heat or cool and/or to keep at a desired temperature for example the milk contained in a baby bottle without the parents having to get up during the night and having to go to the kitchen to heat the milk.

Furthermore, the multifunctional unit 20 comprises an apparatus 4 for the detection of images and/or sounds in order to allow the remote control of the baby himself/herself.

Therefore, as an advantage a parent will be able to monitor his/her baby activities even from a different room by means of known apparatuses which can be remotely connected to the detection apparatus 4. In particular, the apparatus 4 comprises a baby monitor equipped with light led which is connected to an additional portable video camera allowing to remotely display and hear the baby.

In the present example, the multifunctional unit 20 further comprises an audio apparatus 5 for the emission of a sound, for example a relaxing music to encourage the baby's sleeping or sounds set to stimulate the senses and the learning capabilities during the phases of dailyplay. In particular, the audio apparatus 5 comprises a Hi-fi mini-plant with Usb reader and/or Shd card and/or Aux input and/or sound scatterer, everything for hearing fairy tails and melodies conciliating the baby's sleeping and tranquillity. In order to stimulate both motion and brain growing activity, the baby is stimulated by means of several apparatuses, such as for example a video apparatus 6 inserted in the multifunctional unit 20 to allow the display of images and/or videos.

In the preferred embodiment, the multifunctional unit 20 comprises a projector 7 apt to be directed so as to allow the projection of images and/or videos on a desired support, in particular on the ceiling of a room for the development of the baby's visual and psychomotor skills.

Advantageously, in an additional preferred embodiment, the bed system 200 is equipped as an assembling kit.

In all described embodiments of the device according to the present invention, it is advantageously possible to compact spaces and considerably reduce considerably the costs for domestic re-organization due to the birth of the baby. In fact, the device according to the present invention eliminates the need to purchase several apparatuses disconnected therebetween, such as for example the cradle and/or the food warmer and/or the projector and/or the remote video control, and it allows to considerably save both space and costs.

According to an additional embodiment variant, it is possible to make the resting surface 1' of the new-born, and in particular a possible small mattress received therein, selectively raisable or lowerable. Such mobility of the surface 1' can be obtained by means of dedicated actuation means, such as for example an electric motor, that are preferably integrated, in case removably, in the body of the mattress 1 or the bed receiving it and associated, in a known way , to related means for transmitting the motion.

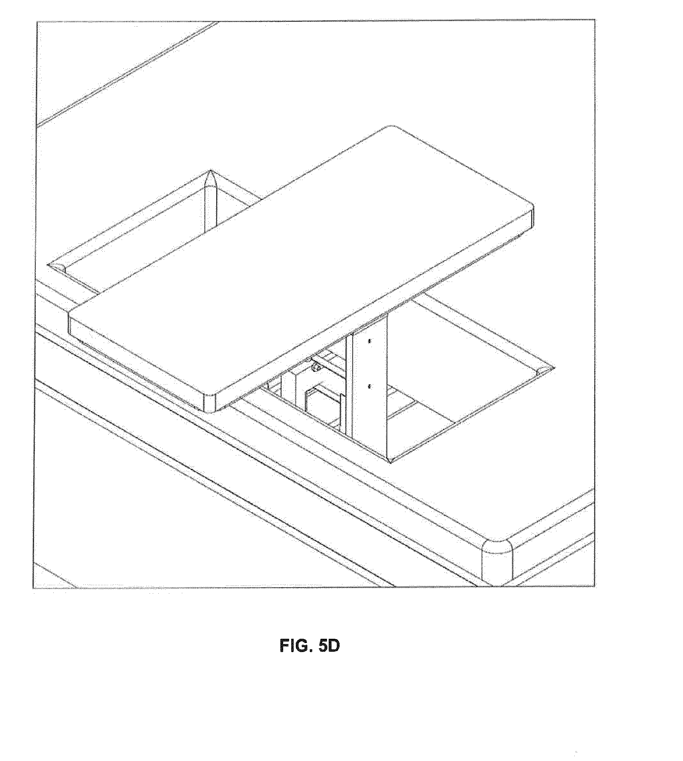

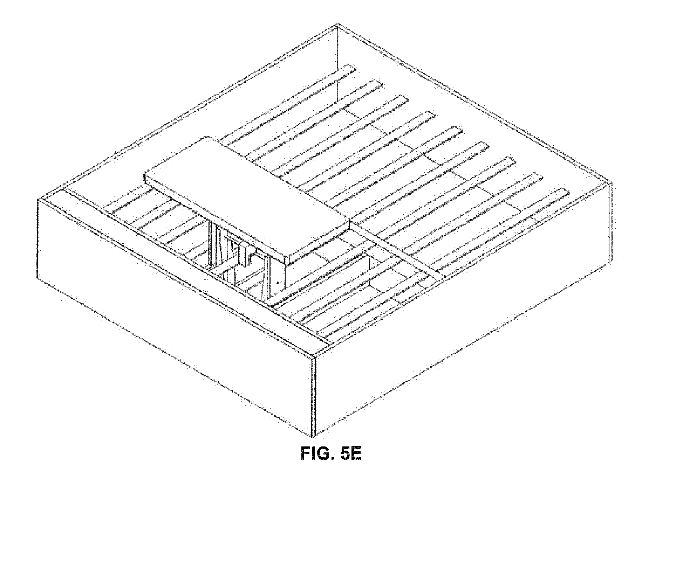

In the example represented in Figure 5A and 5B, it is provided that the mattress, herein indicated as 101, bears a through hole instead of a housing. The resting surface of the new born, indicated as 102, is herein defined by a mobile platform 80 which is integrated in a bed-structure 103 and possibly coated with a small mattress 81 or similar element. As it is represented by arrows F1 and F2 and even in the comparison with Figures 5D and 5E, the platform 80 is equipped with a degree of translational (vertical) freedom and with a degree of rotational freedom around a vertical axis. In other words, the platform 80 can be raised and lowered for a better manoeuvrability and cleaning of the cradle-compartment and it can be even directed in the space when extracted from the mattress 101.

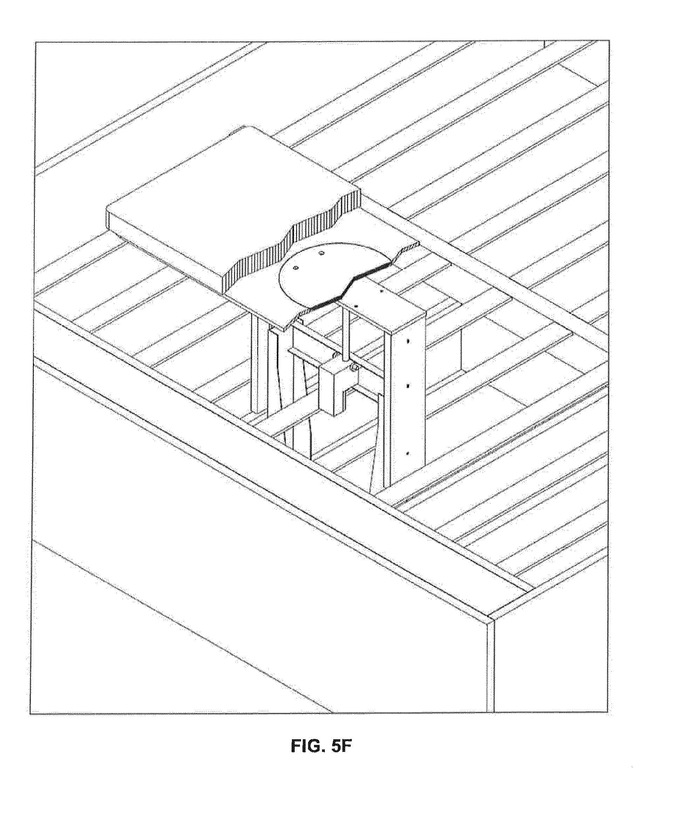

The drawings, in particular Figures 5F and 5G, show an exemplifying mechanism to move the platform 80.

Furthermore, Figures 5G and 5H highlight the fact that said mechanism is able to give the platform an additional degree of rotational freedom and in particular a tilting with respect to an horizontal axis orthogonal to the prevailing dimension of the recess and of the bed, that is to the resting direction of the new born. In this way, the new born can be laid down with his/her head being lifted up with respect to his/her feet.

The invention can be modified by keeping the inventive concept underlying it, as it is possible to replace every detail with another one which is technically equivalent to it. A fantastic multifunctional and practical bed is obtained, ready to house the whole family.

The present invention has been so far described by referring to a preferred embodiment. It is to be meant that other embodiments , all belonging to the same inventive core, may exist, as it is defined by the protection scope of the here below reported claims.

## Claims

1. A mattress (1) apt to allow the rest of an adult lying on a substantially flat surface (1'), said mattress being shaped in such a way as to have a housing (10) apt to allow the rest of a new-born child lying on an additional substantially plane surface (10') defining the bottom of said housing, wherein said surface (1') and said additional surface (10') are lying on respective planes which are substantially parallel and vertically spaced from one another, said housing (10) being substantially in the form of a recess of the mattress itself obtained so that said additional surface (10') is entirely circumscribed by containment walls, wherein said housing (10) has dimensions so as to allow to accommodate a baby lying on said additional surface (10'), the overall configuration being so that said housing (10) has a main dimension corresponding to the height of the lying baby parallel to a main dimension of the mattress corresponding to the height of the lying adult.

2. The mattress (1) according to any one of the preceding claims, further comprising a closure element (100) of said recess (10) apt to be inserted in said recess to have, upon use, a main surface (100') substantially coplanar to said additional surface (1') and apt to be removed to allow the use of the recess itself as housing for a baby in a lying position.

3. The mattress (1) according to the previous claim, wherein said closure element (100) and said recess (10) are configured to engage each other in shape coupling.

4. The mattress (1) according to any one of the preceding claims, further comprising a barrier (2) positioned or positionable, upon use, next to a side of said housing (10) so as to stop the parent from involuntarily falling into the housing itself when he/she is sleeping.

5. The mattress (1) according to the previous claim, wherein said barrier (2) comprises telescopic elements, configured so that they can be inserted in a retractable way into a thickness of the housing (10) in a phase of non-use of the barrier (2) itself.

6. A lining element of a mattress (40), apt to be used in combination with a mattress (1) according to any one of the preceding claims to cover it, in particular a sheet or blanket, which element (40) is shaped to be coupled to said surface (1') and comprises a removable portion shaped to be positioned at said housing (10).

7. The lining element (40) according to the previous claim, comprising means (14) for fixing a peripheral edge of said removable portion to said mattress (1) at said housing (10).

8. The lining element (40) according to the previous claim, wherein said fixing means (14) comprises an elastic element and/or automated elements apt to fix said peripheral edge of said portion at side walls of said housing (10).

9. The lining element (40) according to any one of claims 6 to 8, further comprising a covering element (400) apt to cover a person lying on the lining element (40).

10. The lining element (40) according to the previous claim, wherein said covering element (400) comprises an additional removable portion (400') apt to cover, upon use, said housing (10).

11. A bed system (200), comprising a mattress and/or a lining element (40) according to any one of the preceding claims.

12. The bed system (200), comprising a support element for the mattress, preferably shaped as a bed frame.

13. The bed system (200) according to one of claims 11 or 12, comprising a multi-functional unit (20), preferably positioned or positionable at an outer edge of said mattress (1), preferably at an outer edge of said housing (10).

14. The bed system (200) according to one of claims 11 or 12, comprising a multi-functional unit (20) mounted in a telescopic manner at an outer edge of said frame.

15. The bed system (200) according to one of claims 13 or 14, wherein said multi-functional unit (20) has one or more seats suitable to accommodate one or more devices (3; 4; 5; 6; 7) apt to meet the parents' need of managing the child needs, for example feeding bottle, diapers or other.

16. The bed system (200) according to claim 13 or 14, wherein said multi-functional unit (20) comprises a food warmer (3), the latter preferably having a thermostat to adjust a desired temperature.

17. The bed system (200) according to any one of claims 13 to 16, wherein said multi-functional unit (20) further comprises an apparatus for the detection of images and/or sounds (4) to allow the remote control of the baby himself/herself.

18. The bed system (200) according to any one of claims 13 to 17, wherein said multi-functional unit further comprises an audio apparatus (5) to allow the emission of a sound.

19. The bed system (200) according to any one of claims 13 to 18, wherein said multi-functional unit (20) further comprises a video apparatus (6) to allow the display of images and/or videos.

20. The bed system (200) according to any one of claims 13 to 19, wherein said multi-functional unit (20) comprises a projector (7) apt to be directed so as to allow the projection of images and/or videos on a desired support, in particular on the ceiling of a room.

21. The bed system (200) according to any one of claims 13 to 20, which is provided in form of an assembly kit.

22. The bed system (200) according to any one of claims 13 to 21, wherein said additional surface (1') is raised or lowered selectively.

23. The bed system, comprising:
- a mattress (101) apt to allow the rest of an adult person lying on a substantially plane surface (1'), said mattress being shaped in such a way as to have a through housing apt to allow the rest of a new born child lying on an additional substantially plane surface (102) of the bed system, wherein said surface (1') and said additional surface (102) are lying on respective planes which are substantially parallel and vertically spaced from one another, said housing being substantially in the form of a recess or hole of the mattress itself obtained so that said additional surface (102) is wholly circumscribed by containment walls, wherein said housing (10) has dimensions so as to allow to accommodate a new born lying on said additional surface (102), the overall configuration being so that said housing has a main dimension corresponding to the height of the lying new born parallel to a main dimension of the mattress corresponding to the height of the lying adult;
- means for moving said additional surface (102), configured to raise and lower selectively said surface and preferably to provide thereto one or additional degrees of rotational freedom.
